# EUROPEAN PATENT APPLICATION

(11) **EP 2 192 502 A1**
(43) Date of publication of application: **02.06.2010**
(21) Application number: 08020602.2
(22) Date of filing: 27.11.2008
(51) Int. Cl.: G06F 17/30

(54) **Vehicle-based streaming client with personalized server**

(71) Applicant: Harman Becker Automotive Systems GmbH, 76307 Karlsbad (DE)
(72) Inventor: Bögeholz, Rolf Jörn, 76307 Karlsbad (DE)
(74) Representative: Bertsch, Florian Oliver

(57) **Abstract**

The present invention relates to a method for providing media file information to a vehicle user, comprising the following steps:
- detecting identification information of a media file consumed by the user in the vehicle,
transmitting said identification information of the media file via a mobile communications network to a personalized media file profile server (20) containing a personalized media file profile of said user, the personalized media file profile server providing recommendations for other media files not contained in the personalized media file profile based on the received identification information.

## Description

This invention relates to a method for providing media file information to a vehicle user and to a system therefor.

### Related Art

Streaming involves sending media files from a server to a client over a network such as the internet. The server breaks the media file into packets that can be sent over the network. At the receiver the packets are reassembled and the media file is played as it arrives at the receiver. A series of related packets is called a stream.

Streaming clients are by now only available for desktop computers and mobile phones. Due to the limited bandwidth and the limited availability of mobile internet access, no vehicle-based application is known.

Furthermore, music databases like Last.fm are known in the internet where listening habits of different users are tracked and where relationships and recommendations are calculated based on the music the users listen to.

However, many users consume a lot of media files in the vehicle where the listening habits are not tracked so that the user habits cannot be determined correctly.

### Summary

Accordingly, a need exists to provide the possibility to determine the listening habits of media files of a user when driving in a vehicle.

This need is met by the features of the independent claims. In the dependent claims preferred embodiments of the invention are described.

According to a first aspect a method is provided for providing media file information to a vehicle user, wherein the identification information of a media file consumed by the user of the vehicle is detected. When the consumed media file has been identified, the identification information of the consumed media file is transmitted via a mobile communications network to a personal media file profile server containing a personalized media file profile of the user. The personalized media file profile server receiving the identification information provides recommendations for other media files not contained in the personalized media file profile based on the received identification information. With the above-mentioned step the user behavior, especially his or her media consumption, can be tracked during driving and the user can receive media recommendations based on the detected consumption behavior. As many people spend a lot of time in vehicles and consume a major part of their media files in the vehicle, the invention allows to better detect the consumption behavior of a user. The better the consumption behavior is known, the better the recommendations of the personalized media file profile server fit the user's needs.

When a recommended media file proposed by the personal media file profile server is selected by the user, said media file can be streamed by the mobile communications network to the vehicle user. The mobile communications network can be a UMTS network having the bandwidth to allow a streaming of a media file. The mobile communications network may also be based on the GPRS or the EDGE technique.

In one embodiment of the invention it is checked whether a connection to the personalized media file profile server via the mobile communications network is possible. If it is possible to reach the personalized media file profile server, the identification information is transmitted to the server when the media file is consumed. If it is however detected that the vehicle is moving in an area with no coverage through the mobile communications network, the identification information of the consumed media file or the consumed media files is stored in the vehicle and transmitted to the personalized media file profile server when a connection to the server is possible again. It may happen that while driving the internet cannot be accessed. In order to avoid that the information about the listening habits or consumer habits is lost, the consumed media files that are consumed when no connection to the server is possible are stored and are transmitted to the personalized media file profile server when coverage by the mobile communications network exists again. The personalized media file server tracks the listening or consumption habits of a plurality of users and provides recommendations for the user that was transmitting his or her consumed media files during driving by comparing the identification information received from the vehicle to the consumption habits of said plurality of users.

The media file that is consumed by a user in the vehicle may be played out from a media file database provided in the vehicle or connected in other ways to the vehicle's infrastructure in order to detect which media files from the storage medium were consumed in the vehicle. A display of the vehicle may be used to display information extracted from metadata contained in the streamed media file informing the user about the name of the consumed media file when the streaming content of the media file is streamed. For the audio output the loudspeaker system provided in the vehicle may be used.

According to another aspect of the invention a vehicle system is provided comprising a media file detector detecting identification information of the consumed media file. Further, a transmitter is provided transmitting said identification information of the consumed media file via the mobile communications network to the personalized media file profile server containing the personalized media file profile of said user. Furthermore, a receiver is provided receiving the recommendations for other media files based on the identification information transmitted to the personalized media file profile server. Furthermore, a streaming client provided in the vehicle system is configured to stream a media file received from the server.

Furthermore, in case the connection to the mobile communications network is not possible, the information about the consumed media file should be stored in the vehicle. To this end a storage unit is provided storing the identification information of the consumed media file or media files that were consumed when the system in the vehicle was not connected to the mobile communications network.

### Brief Description of the Drawings

The invention will best be understood by reference to the following detailed description of illustrative embodiments, when read in conjunction with the accompanying drawings, wherein
Fig. 1 schematically shows a system tracking the user habit in a vehicle and allowing to stream a recommended media file to the vehicle user,
Fig. 2 shows a flowchart containing steps that are carried out when a recommended media file is streamed,
Fig. 3 shows another embodiment of a system allowing to stream a media file in a vehicle and allowing to detect the consumption habits of a user in the vehicle, and
Fig. 4 shows a flowchart containing the steps for transmitting or storing identified file information depending on a network coverage.

### Detailed Description of the Preferred Embodiments

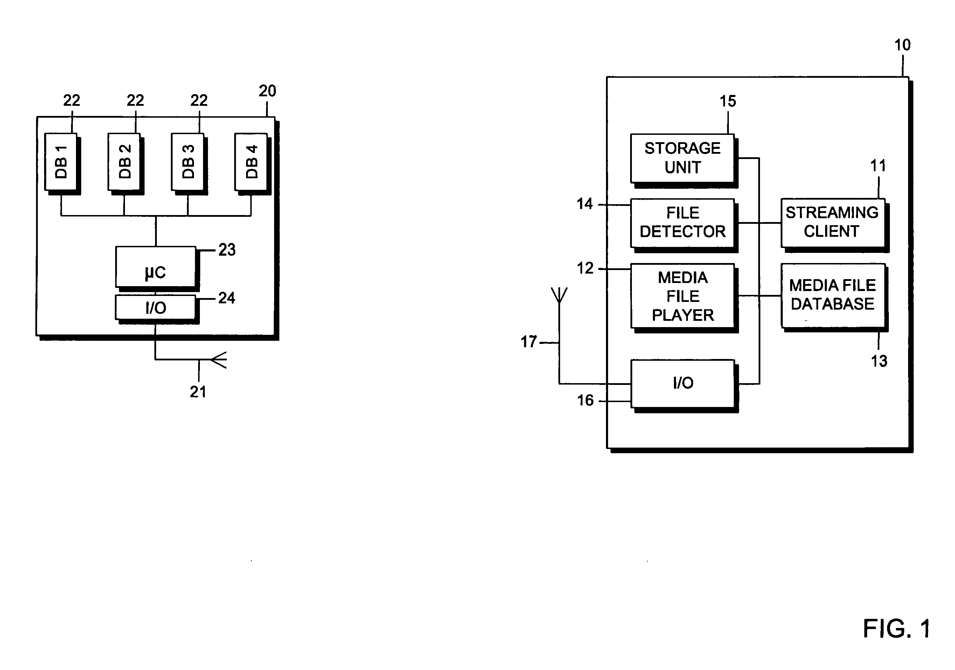

With reference to the figures and in particular with reference to Fig. 1 a block diagram of a system is shown allowing to stream media files in a vehicle and allowing to track the media content which is consumed by a user in the vehicle during driving. The user may be the driver himself, however the user may also be another passenger sitting in the vehicle, e.g. at the backseat consuming an audio and/or video file. The system shown in Fig. 1 comprises a vehicle-based system 10 incorporated into a vehicle and a personalized media file profile server 20. The system 10 comprises a streaming client supporting the reception of multimedia streams received from the personalized media file profile server 20. The system 10 furthermore comprises a media file player 12 which is adapted to play out media files such as audio and video files which can be stored in a media file database 13. The media files may be stored in the media file database in a compressed way using known compression techniques, e.g. the MPEG format. Furthermore, a file detector 14 is provided detecting the media files played out by the media file player 12. Furthermore, a storage unit 15 is provided storing information detected by the media file detector 14. The media file detector detects the identification information of the consumed media files played out in the media file player, the identification information allowing to identify the media file. By way of example in the case of an audio file the file detector may retrieve the artist or composer of the media file and the name of the piece or the name of the song contained in the media file. The storage unit 15 may be needed when the vehicle-based system 10 cannot be connected to the server 20 via the mobile communications network as will be explained in detail further below. The system 10 furthermore comprises an input/output unit 16 connected to an antenna 17 allowing to transmit data from the system 10 to the server 20 and vice versa.

The server 20 comprises an antenna 21 receiving data from the system 10 and transmitting media streams to the system 10. The personalized media file server 20 comprises a plurality of different databases 22, each database storing a media file profile of a user. Accordingly, the server 20 comprises a plurality of different personalized profiles, each profile describing the consumption habits of the different users. In case the identification information of the media file played out by the media file player 12 is transmitted to the server 20, the received identification information of a user is compared to the different databases 22 using a control unit 23. The control unit 23 provides recommendations to the user of the system 10 by comparing the consumed media file to the other consumption habits of the users and by proposing new media files to the user taking into account e.g. media files of the same genre or of the same artist that were consumed by other users.

Furthermore, an input/output unit 24 controls the reception of identification information from a system 10 and the streaming of the media files to the system 10.

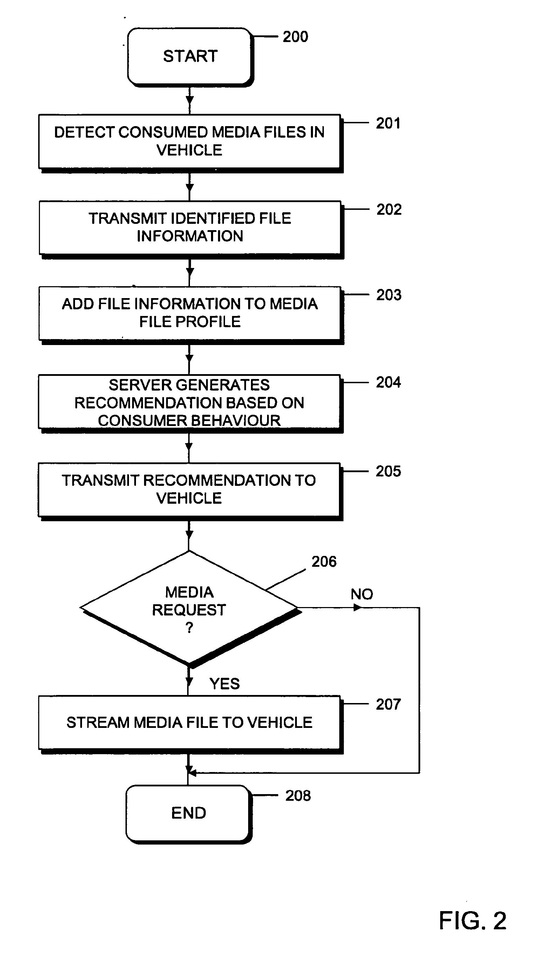

In Fig. 2 a flowchart is shown how the consumption habits of a vehicle user can be detected more accurately. The method starts in step 200. In a step 201 the media files consumed in a vehicle during driving are detected using the file detector 14. The media files played out by the media file player can be stored on the media file database 13. For each media file consumed file identification information is retrieved from the media file and may be stored in the storage unit 15 even though the storage is not mandatory when a wireless connection to the server 20 is available. The media files consumed by a user will be transmitted in step 202 to the server. At the server 20 the received identification information is added to one of the databases, namely the database of the user. This helps to improve the consumption profile for the vehicle user. The control unit 23 then compares information about the consumed media files to the different media file profiles stored in the server and generates recommendations for said user about similar media files (step 204). This recommendation is then transmitted to the vehicle user in step 205. This makes it possible for the user to discover new media files.

The user in the vehicle receives the recommendation and can then decide whether one or any of the proposed media files is selected for streaming (step 206). When the user has selected a media file, the media file is streamed to the vehicle user via a mobile communications network. By way of example the received media stream may be a HTTP-based stream, a FTP(File Transfer Protocol)-based stream or a RTP (Real-Time Transport Protocol) stream (step 207). If none of the recommendations is followed and no media stream is selected for streaming, the method may directly end in step 208.

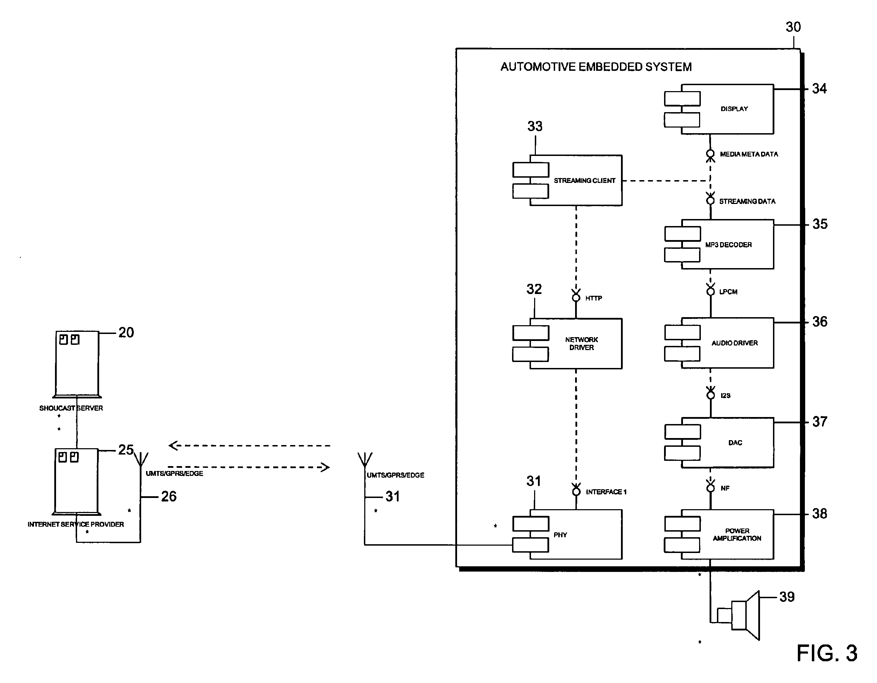

In Fig. 3 the vehicle-based system is shown in another embodiment. The system 30 can receive a media file from the personalized file profile server 20 which transmits the streamed media file to an internet service provider 25 which is responsible for streaming the media file via the mobile communications network to the system 30. The media stream transmitted from antenna 26 and received by antenna 31 is received by an input/output unit 31 of the system 30. From the input/output unit 30 the media stream is fed to a network driver 32 before the packets of the media stream are transmitted to the streaming client 33, where the received media files are prepared for playout, e.g. by retrieving file identification data from the metadata contained in the stream. The file identification data contained in the metadata can be displayed on the display 34 and the stream data are fed to a decoding unit 35 which might be a MP3 decoder in case the received media stream is MP3-encoded. From the MP3 decoder the data packets are transmitted to the audio driver 36 before they are converted from digital to analog in digital-to-analog converter 37. Power amplification is carried out in the power amplifier 38 and in case of an audio file the audio file may be output using the loudspeaker 39 provided in the vehicle.

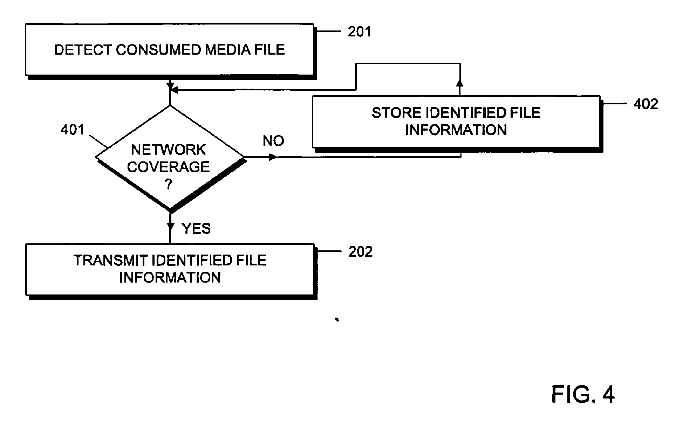

When the vehicle is moving during consumption of the media file, it can happen that a coverage by the mobile communications network is not always present. In order to avoid that the information about the consumed media files is lost and not transmitted to the server 20, the identification information of the consumed media files has to be preliminarily stored before the information can be transmitted to the server 20. Such an embodiment is shown in Fig. 4. After detection of the consumed media file as already discussed in step 201, it can be asked in step 401 whether a connection to the mobile communications network is possible or not. If no connection is possible, i.e. in the case of no network coverage, the file identification data are stored in step 402. When a connection to the mobile communications network becomes possible again, the stored information can be transmitted to the server as discussed above in connection with step 202.

Summarizing, the present invention allows to track the media content consumed by a vehicle user, allows the recommendation of streaming files and allows the streaming of a selected media file itself in a vehicle environment.

## Claims

1. A method for providing media file information to a vehicle user, comprising the following steps:
- detecting identification information of a media file consumed by the user in the vehicle,
transmitting said identification information of the media file via a mobile communications network to a personalized media file profile server (20) containing a personalized media file profile of said user, the personalized media file profile server providing recommendations for other media files not contained in the personalized media file profile based on the received identification information.

2. The method according to claim 1, wherein, upon selection of a media file from the personalized media file profile server, said media file is streamed via the mobile communications network to the vehicle user.

3. The method according to claim 1 or 2, wherein it is checked whether a connection to the personalized media file profile server via the mobile communications network is possible, wherein in the affirmative, the identification information is transmitted to the server when the media file is consumed.

4. The method according to any of the preceding claims, wherein it is checked whether a connection to the personalized media file profile server via the mobile communications network is possible, wherein when no connection is possible, the identification information of the consumed media file is stored in the vehicle and transmitted to the personalized media file profile server when the connection to the personalized media file profile server is possible again.

5. The method according to any of the preceding claims, wherein the personalized media file server (20) tracks consumption habits of a plurality of users and provides said recommendations by comparing the identification information to the consumption habits of said plurality of users.

6. The method according to any of the preceding claims, wherein the media file consumed by the user is played out from a media file database provided in the vehicle.

7. The method according any of claims 2 to 6, wherein display information is extracted from metadata contained in the streamed media file and displayed on a display of the vehicle when a streaming content of the media file is streamed.

8. A vehicle system (10) for providing media file information to a vehicle user, comprising:
- a media file detector (14) detecting identification information of a media file consumed by the user in the vehicle,
- a transmitter (16) transmitting said identification information of the media file via a mobile communications network to a personalized media file profile server (20) containing a personalized media file profile of said user,
- a receiver (16) for receiving recommendations for other media files not contained in the personalized media file profile based on the transmitted identification information, and
- a streaming client streaming a media file received from the personalized media file profile server.

9. The system further comprises a storage unit (15) storing the identification information of the consumed media file when a transmission of the identification information to the personalized media file profile server is not possible.
